(19) Europäisches Patentamt
European Patent Office
Office européen des brevets

(11) EP 1 383 812 B1

(12) **EUROPEAN PATENT SPECIFICATION**

(45) Date of publication and mention of the grant of the patent:
**31.05.2006 Bulletin 2006/22**

(21) Application number: **02757868.1**

(22) Date of filing: **27.03.2002**

(51) Int Cl.:
*C08F 232/08* (2006.01) *G03F 7/039* (2006.01)
*G03F 7/004* (2006.01)

(86) International application number:
**PCT/US2002/009799**

(87) International publication number:
**WO 2002/079287 (10.10.2002 Gazette 2002/41)**

(54) **POLYCYCLIC FLUORINE-CONTAINING POLYMERS AND PHOTORESISTS FOR MICROLITHOGRAPHY**

POLYCYCLISCHE, FLUOR ENTHALTENDE POLYMERE UND PHOTORESIST FÜR MIKROLITHOGRAPHIE

FLUOROPOLYMERES POLYCYCLIQUES ET PHOTORESINES POUR MICROLITHOGRAVURE

(84) Designated Contracting States:
**DE FR GB IE IT NL**

(30) Priority: **30.03.2001 US 280269 P**

(43) Date of publication of application:
**28.01.2004 Bulletin 2004/05**

(73) Proprietor: **E. I. du Pont de Nemours and Company**
**Wilmington,**
**Delaware 19898 (US)**

(72) Inventors:
- **FEIRING, Andrew, E.**
  **Wilmington, DE 19807 (US)**
- **SCHADT, Frank, L., III**
  **Wilmington, DE 19806 (US)**

(74) Representative: **Morf, Jan Stefan et al**
**Abitz & Partner**
**Patentanwälte**
**Postfach 86 01 09**
**81628 München (DE)**

(56) References cited:
**EP-A- 0 437 619** **US-A- 2 928 865**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

**Description**

BACKGROUND OF THE INVENTION

1. Field of the Invention

The present invention pertains to photoimaging and, in particular, the use of photoresists (positive-working and/or negative-working) for imaging in the production of semiconductor devices. The present invention also pertains to novel fluorine-containing polymer compositions which are useful as base resins in resists and potentially in many other applications.

2. Description of Related Art

Polymer products are used as components of imaging and photosensitive systems and particularly in photoimaging systems such as those described in Introduction to Microlithography, Second Edition by L. F. Thompson, C. G. Willson, and M. J. Bowden, American Chemical Society, Washington, DC, 1994. In such systems, ultraviolet (UV) light or other electromagnetic radiation impinges on a material containing a photoactive component to induce a physical or chemical change in that material. A useful or latent image is thereby produced which can be processed into a useful image for semiconductor device fabrication.

Although the polymer product itself may be photoactive, generally a photosensitive composition contains one or more photoactive components in addition to the polymer product. Upon exposure to electromagnetic radiation (e.g., UV light), the photoactive component acts to change the rheological state, solubility, surface characteristics, refractive index, color, electromagnetic characteristics or other such physical or chemical characteristics of the photosensitive composition as described in the Thompson et al. publication supra.

For imaging very fine features at the submicron level in semiconductor devices, electromagnetic radiation in the far or extreme ultraviolet (UV) is needed. Positive working resists generally are utilized for semiconductor manufacture. Lithography in the UV at 365 nm (I-line) using novolak polymers and diazonaphthoquinones as dissolution inhibitors is a currently established chip technology having a resolution limit of 0.35-0.30 micron. Lithography in the far UV at 248 nm using p-hydroxystyrene polymers is known and has a resolution limit of 0.35-0.18 nm. There is strong impetus for future photolithography at even shorter wavelengths, due to a decreasing lower resolution limit with decreasing wavelength (i.e., a resolution limit of 0.18-0.12 micron for 193 nm imaging). Photolithography using 193 nm exposure wavelength (obtained from an argon fluorine (ArF) excimer laser) is a leading candidate for future microelectronics fabrication using 0.18 and 0.13 μm design rules. Photolithography using 157 nm exposure wavelength (obtained using an $F_2$ laser source) may be used for future microelectronics fabrication using 0.100 μm or less design rules. The opacity of traditional near UV and far UV organic photoresists at 193 nm and shorter wavelengths precludes their use in single-layer schemes at these wavelengths.

Some resist compositions suitable for imaging at 193 nm are known. For example, photoresist compositions comprising cycloolefinmaleic anhydride alternating copolymers have been shown to be useful for imaging of semiconductors at 193 nm (see F. M. Houlihan et al, *Macromolecules,* 30, pages 6517-6534 (1997); T. Wallow et al., *SPIE,* Vol. 2724, pages 355-364; and F. M. Houlihan et al., *Journal of Photopolymer Science and Technology,* 10, No. 3, pages 511-520 (1997)). Several publications are focused on 193 nm resists (i.e., U. Okoroanyanwu et al, *SPIE,* Vol. 3049, pages 92-103; R. Allen et al., *SPIE,* Vol. 2724, pages 334-343; and *Semiconductor International,* Sept. 1997, pages 74-80). Compositions comprising addition polymers and/or ROMP (ring-opening methathesis polymerization) of functionalized norbornenes have been disclosed (e.g., PCT WO 97/33198 (9/12/97) to B. F. Goodrich). Homopolymers and maleic anhydride copolymers of norbornadiene and their use in 193 nm lithography have been disclosed (J. Niu and J. Frechet, Angew. *Chem. Int. Ed.,* 37, No. 5, (1998), pages 667-670).

Copolymers of fluoroolefin monomers and certain cyclic unsaturated monomers are described in U.S. Patents 5,177,166 and 5,229,473 which do not disclose the use of these copolymers in any photosensitive compositions.

Homopolymers and copolymers of certain monomers that possess properties of being both cyclic and fluorine-containing are described as well as their application as components in photodefinable fluorine-containing polymer films, see Japanese Kokai No Hei 9(1997)-43856. There is no teaching in this reference of homopolymers or copolymers comprised of polycyclic comonomers as photoresist components. Furthermore, there is no teaching that the compositions disclosed in this Japanese Kokai could be used in photoresists with imaging effected at far UV wavelengths of less than 180 nm.

U.S. Patent 5,655,627 discloses a process for generating a negative tone resist image by coating a silicon wafer with a copolymer resist solution of pentafluoropropyl methacrylate-t-butyl methacrylate in a solvent, and then exposing at 193 nm and developing with a carbon dioxide critical fluid.

There is a need for resist compositions for use at 193 nm or lower wavelengths, and particularly at 157 nm,

that have not only high transparency at these short wavelengths but also other suitable key properties, including good plasma etch resistance and adhesive properties.

SUMMARY OF THE INVENTION

This invention relates to a fluorine-containing polymer comprising a repeat unit derived from at least one ethylenically unsaturated polycyclic compound of structure 1:

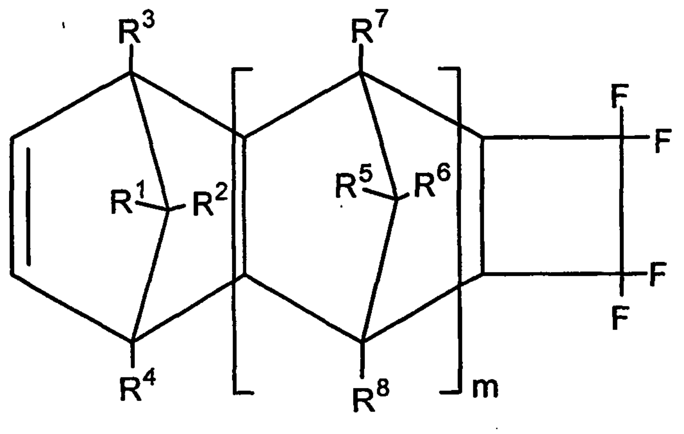

1

wherein:

$R^1$ to $R^8$ are the same or different and each represents a hydrogen atom, a halogen atom, a carboxyl group, a hydrocarbon group of 1 to 20 carbon atoms or a substituted hydrocarbon group of 1 to 20 carbon atoms and at least one oxygen, sulfur or nitrogen atom; and
m is 0, 1, or 2.

In a further embodiment the invention relates to a polymer comprising the polymerization product of a bicyclo-[2.2.1]hepta-1,5-diene and a fluorolefin, preferably tetrafluoroethylene and chlorotrifluoroethylene.

In a still further embodiment, the invention relates to a photoresist composition comprising the fluorine-containing polymer of structure 1 and a photoactive component.

In yet a further embodiment, the invention relates to a process for preparing a photoresist image on a substrate using the photoresist composition of this invention.

In a still further embodiment, the invention relates to an article of manufacture in which a substrate is coated with the photoresist composition.

DETAILED DESCRIPTION OF THE PREFERRED EMBODIMENT(S) Fluorine Containing Polymer:

The fluorine-containing polymer comprises a repeat unit derived from at least one ethylenically unsaturated polycyclic compound of structure **1**:

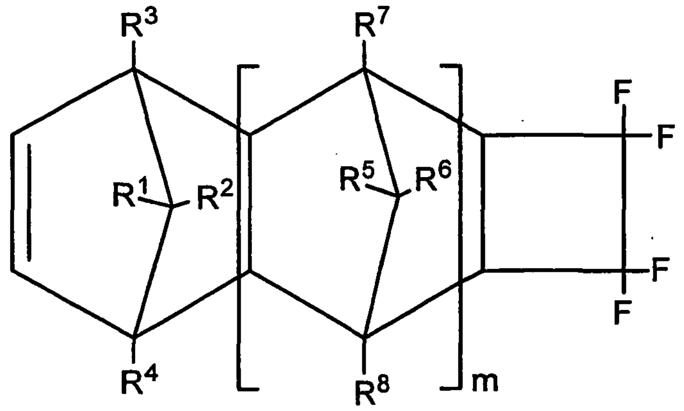

**1**

wherein:

$R^1$ to $R^8$ are the same or different and each represents a hydrogen atom, a halogen atom, a carboxyl group, a hydrocarbon group of 1 to 20 carbon atoms or a heteroatom substituted hydrocarbon group of 1 to 20 carbon atoms and one or more heteroatoms. The value of m is 0, 1, or 2. The hydrocarbon group can be straight chain or branched chain, paraffinic or olefinic, alicyclic or aromatic. Suitable heteroatoms include oxygen, nitrogen or sulfur. An example of a hydrocarbon group containing oxygen as a heteroatom is an alkyl carboxylate group containing from 1 to 20 carbon atoms, preferably from 3 to about 14 carbon atoms, or an alkoxy group containing from 1 to 20 carbon atoms. When the hydrocarbon group is an alkyl carboxylate group, it can be a secondary or tertiary alkyl carboxylate group which is preferred because such alkyl carboxylates cleave more readily than the primary alkyl carboxylate groups. It can be useful to limit the extent of aromatic substituents for transparency at the lower wavelenths. Typically, the polymer is free of aromatic groups.

A representative, and preferred, ethylenically unsaturated polycyclic compound is 3,3,4,4-tetrafluorotricyclo [4.2.1.$0^{2,5}$]non-7-ene (NB-TFE) and which has the following structural formula:.

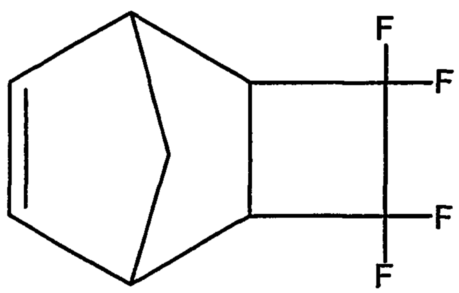

**NB-TFE**

The ethylenically unsaturated polycyclic compounds of structure **1** may be prepared by processes known in the art. In one process, norbornadiene or appropriately chosen derivative is reacted with a fluorolefin as disclosed by Brasen (US Patent 2,928,865 (1960)) and illustrated by equation 1 (below). In an alternative process, cyclopentadiene or appropriately chosen derivatives may be reacted with 3,3,4,4-tetrafluorocyclobutene as disclosed by Shozda and Putnam *(Joumal of Organic Chemistry,* volume 27, pages 1557-1561 (1962)) and illustrated by equation 2 (below).

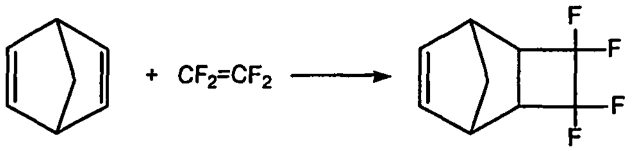

(Equation 1)

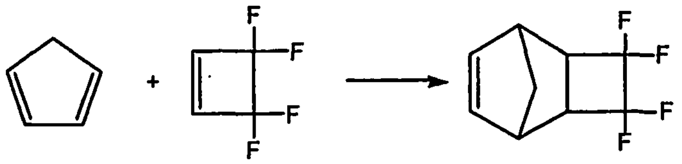

(Equation 2)

In the compound of structure 1 the presence of at least one polycyclic comonomer (i.e., a comonomer comprising at least two rings, e.g., norbornene) is important for three main reasons: 1) polycyclic monomers have relatively high carbon to hydrogen ratios (C:H), which results in base polymers comprised of repeat units of these polycyclic monomers generally having good plasma etch resistance; 2) polymers having repeat units derived from polyclic monomers, which preferably can be fully saturated upon polymerization, generally have good transparency characteristics; and 3) polymers prepared from polycyclic monomers usually have relatively high glass transition temperatures for improved dimensional stability during processing. A polymer comprised of repeat units derived from polycyclic comonomers, having high C:H ratios, has a relatively low Ohnishi number (O.N.), where:

$$O.\ N. = N/\ (N_C\text{-}N_O)$$

with N being the number of atoms in the repeat unit of the polymer, $N_c$ being the number of carbon atoms in the repeat unit of the polymer, and No being the number of oxygen atoms in the repeat unit of the polymer. There is an empirical law discovered by Ohnishi et al. *(J. Electrochem. Soc., Solid-State Sci. Technol.,* 130, 143 (1983) which states that the reactive ion etch (RIE) rate of polymers is a linear function of the Ohnishi number (O.N.). As one example, poly(norbornene) has formula $(C_7H_{10})_n$ and the O.N. = 17/7 = 2.42. Polymers comprised predominantly of carbon and hydrogen having polycyclic moieties and relatively little functionality containing oxygen will have relatively low O.N.s and will, according to the empirical law of Ohnishi, have corresponding low (in an approximate linear manner) RIE rates.

A suitable polycyclic compound that may be used to form the compound of structure 1 is a bicyclo-[2.2.1]hepta-2,5-diene such as the kind described in U.S. Patent No. 2,928,865. Preferred cyclic compounds that can be used are bicyclo-[2.2.1]hepta-2,5-dienes having the structure

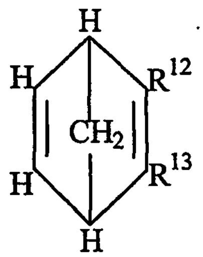

where $R^{12}$ and $R^{13}$ are hydrogen, alkyl groups of not more than 6 carbons or carboxyl groups or groups hydrolyzable thereto. Examples of hydrolyzable $R^1$ and $R^2$ groups are cyano, ethoxycarbonyl and dimethylcarbamyl.

Suitable fluorolefins that may be used to form the compound of structure 1 are described in U.S. Patent No. 2,928,865.

For example, more generally,a fluoroolefin containing at least one ethylenically unsaturated compound which contains at least one fluorine atom covalently attached to the ethylenically unsaturated carbon atom can be used. The fluoroolefin can comprise 2 to 20 carbon atoms and, preferably, the olefinic unsaturation is in a terminal position. In one embodiment, the terminal carbon of the olefinic linkage is bonded to at least one fluorine atom and the remaining carbon atom of the olefinic linkage is singly bonded on the one hand to a hydrogen atom, fluorine, chlorine or bromine atom, or omega-hydroperfluoroalkyl group of no more than 10 carbon atoms, or a perfluoroalkyl group of no more than 10 carbon

atoms and on the other hand is singly bonded to hydrogen atom, a fluorine, chlorine or bromine atom, an alkyl group, an omega hydroperfluoroalkyl group, a perfluoroalkyl group or a haloalkyl group containing at least one fluorine, chlorine or bromine atom and the alkyl, fluoroalkyl or haloalkyl groups contain from 1 to 10 carbon atoms.

The fluoroolefin, more specifically, can have the structure:

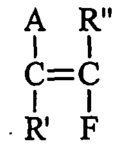

wherein A is a fluorine, chlorine or bromine atom, an omega-hydroperfluoroalkyl group of 1 to 10 carbon atoms, or a perfluoroalkyl group of 1 to 10 carbon atoms or a perfluoroalkoxyl group of 1 to 10 carbon atoms; R' and R" are each the same or different A, hydrogen, an alkyl group of 1 to 10 carbon atoms or a haloalkyl group containing at least one fluorine, chlorine, or bromine atom and 1 to 10 carbon atoms or R' and R", taken together form a ring structure.

Specific examples of fluoroolefins include tetrafluoroethylene, hexafluoropropylene, chlorotrifluoroethylene, vinylidene fluoride, vinyl fluoride, perfluoro-(2,2-dimethyl-1,3-dioxole), perfluoro-(2-methylene-4-methyl-1,3-dioxolane), $CF_2=O(CF_2)_tCF=CF_2$, where t is 1 or 2, and $R_fOCF_2=CF_2$ wherein $R_f$ is a saturated fluoroalkyl group of from 1 to ten carbon atoms. A preferred fluoroolefin is tetrafluoroethylene.

The compound of structure 1 has been found to form a polymer by polymerization processes. As is well known to those skilled in the polymer art, an ethylenically unsaturated compound undergoes free radical polymerization to afford a polymer having a repeat unit that is derived from the ethylenically unsaturated compound. Free radical polymerization processes may be employed to prepare polymers derived from structure 1 which may optionally contain at least one other monomer which is known to undergo free radical polymerization. Thus, for example, free radical polymerization may be employed to prepare polymers comprising structure 1 and an additional repeat unit derived from a least one ethylenically unsaturated compound which contains at least one fluorine atom covalently attached to an ethylenically unsaturated carbon atom. A fluorine-containing copolymer, containing only repeat units derived from all cyclic comonomers and totally lacking a repeat unit derived from a comonomer that has one or more fluorine atom(s) attached to an ethylenically unsaturated carbon atom(s) can be prepared by vinyl-addition polymerization and ring-opening methathesis polymerization (ROMP). Vinyl-addition polymerization using nickel and palladium catalysts is disclosed in the following references: 1) Okoroanyanwu U.; Shimokawa, T.; Byers, J. D.; Willson, C. G. *J. Mol. Catal. A*: *Chemical* 1998, 133, 93; 2) PCT WO 97/33198 (9/12/97) assigned to B.F. Goodrich; 3) Reinmuth, A.; Mathew, J. P.; Melia, J.; Risse, W. *Macromol. Rapid Commun.* 1996, 17, 173; and 4) Breunig, S.; Risse, W. *Makromol. Chem.* 1992, 193, 2915. Ring-opening metathesis polymerization is disclosed in references 1) and 2) supra using ruthenium and irridium catalysts; and also in 5) Schwab, P.; Grubbs, R. H.; Ziller, J. W. *J. Am. Chem. Soc.* 1996, 118, 100; and 6) Schwab, P.; France, M. B.; Ziller, J. W.; Grubbs, R. H. Angew. *Chem. Int. Ed. Engl.* 1995, 34, 2039.

Preferably, the polymerization reaction is carried out to form a macromolecule of greater than two repeat units. Preferably, the polymer of this invention has a molecular weight (Mn) of greater than 2,000, preferably greater than 4,000.

The polymer derived from a compound of structure 1 may further comprise a repeat unit derived from a fluorolefin. Suitable fluorolefins include those described above for use in making the compound of structure 1. When the fluorolefin is tetrafluoroethylene, the resulting polymer, when employed in a photoresist composition, can have a high glass transition temperature and low absorbance at 157 nm.

The polymer of this invention may further comprise a fluoroalcohol group. The fluoroalcohol group can be derived from at least one ethylenically unsaturated compound containing a fluoroalcohol group having the structure:

$$-C(R_f)(R_f')OH$$

wherein $R_f$ and $R_f'$ are the same or different fluoroalkyl groups of from 1 to 10 carbon atoms or taken together are $(CF_2)_n$ wherein n is 2 to 10. These fluoroalkyl groups are designated as $R_f$ and $R_f'$, which can be partially fluorinated alkyl groups or fully fluorinated alkyl groups (i.e., perfluoroalkyl groups). Broadly, $R_f$ and $R_f'$ are the same or different fluoroalkyl groups of from 1 to about 10 carbon atoms or taken together are $(CF_2)_n$ wherein n is 2 to 10. In the last sentence, the terms "taken together" indicate that $R_f$ and $R_f'$ are not separate, discrete fluorinated alkyl groups, but that together they form a ring structure such as is illustrated below in case of a 5-membered ring:

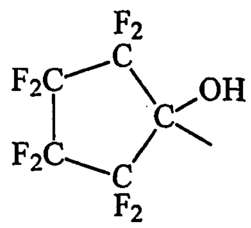

$R_f$ and $R_f'$ can be partially fluorinated alkyl groups without limit according to the invention except that there must be a sufficient degree of fluorination present to impart acidity to the hydroxyl (-OH) of the fluoroalcohol functional group, such that the hydroxyl proton is substantially removed in basic media, such as in aqueous sodium hydroxide solution or tetraalkylammonium hydroxide solution. In preferred cases according to the invention, there will be sufficient fluorine substitution present in the fluorinated alkyl groups of the fluoroalcohol functional group such that the hydroxyl group will have a pKa value as follows: $5 < pKa < 11$. Preferably, $R_f$ and $R_f'$ are independently perfluoroalkyl group of 1 to 5 carbon atoms, and, most perferably, $R_f$ and $R_f'$ are both trifluoromethyl ($CF_3$).

When the fluorine-containing polymer of this invention comprises a fluoroalcohol, the fluoroalcohol group may have the structure:

$$-XCH_2C(R_f)(R_f')OH$$

wherein $R_f$ and $R_f'$ are as described above, X is an element from Group VA and VIA of the Periodic Table of the Elements (CAS Version), for example, oxygen, sulfur, nitrogen and phosphorous. Oxygen is the preferred X group.

Some illustrative examples of representative comonomers containing a fluoroalcohol functional group and within the scope of the invention are presented below:

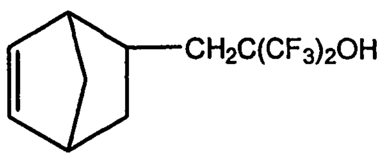

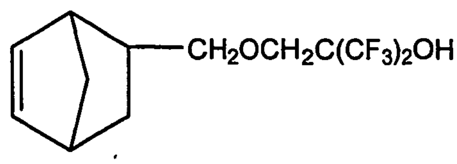

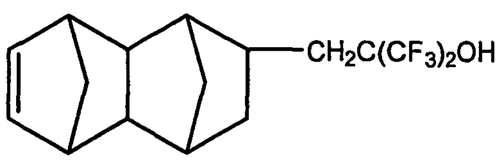

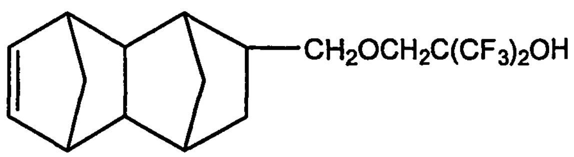

$CH_2=CHOCH_2CH_2OCH_2C(CF_3)_2OH$ $CH_2=CHO(CH_2)_4OCH_2C(CF_3)_2OH$

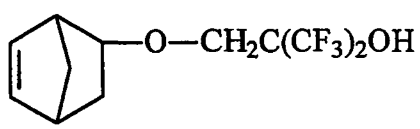

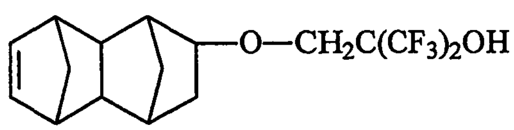

The polymer can further comprise at least one acid-containing monomer of structural unit:

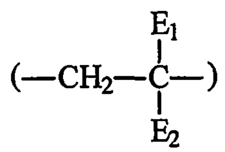

in which $E_1$ is H or $C_1$-$C_{12}$ alkyl; $E_2$ is $CO_2E_3$, $SO_3E$, or other acidic group; and E and $E_3$ are H or $C_1$-$C_{12}$ alkyl, which is unsubstituted or heteroatom substituted. Suitable heteroatoms are oxygen, nitrogen, sulfur, halogen or phosphorus atoms. When the heteroatom is oxygen the substituent may contain a hydroxyl-group. Alkyl groups can contain one to twelve carbon atoms and preferably one to about eight. Preferably, the acid group is a carboxylic acid. A preferred additional monomer is an acrylate. Tertiary alkyl acrylates such as tert-butyl acrylate and 2-methyl-2-adamantyl acrylate, may provide acid sensitive functionality for image formation as discussed above. Other acrylates, such as acrylic acid and methyl acrylate may be employed to modify the adhesion or solubility of the polymer. In one embodiment tert-butylacrylate may be incorporated into the polymer which introduces acid-labile tert-butyl ester groups. The level of carboxylic acid groups which can be used in the polymer is determined for a given composition by optimizing the amount needed for good development in aqueous alkaline developer.

Additional polar monomers such as vinyl acetate may also be incorporated into the polymer in order to assist aqueous development or otherwise modify polymer properties.

The fluoro alcohol group and/or other acid group of the polymer can contain a protecting group which protects the fluorinated alcohol group and/or other acid group (i.e., the protected group) from exhibiting its acidity while in this protected form. As one illustrative example, the tertiary-butyl group is the protecting group in a tertiary-butyl ester and this protecting group protects the free acid. In undergoing deprotection (conversion of protected acid to free acid), the ester is converted to the corresponding acid.

An alpha-alkoxyalkyl ether group is a preferred protecting group for the fluoroalcohol group in order to maintain a high degree of transparency in the photoresist composition. The resulting protected fluoroalcohol group has the structure:

$$-C(R_f)(R_f')O-CH_2OCH_2R_x$$

In this protected fluoroalcohol, $R_f$ and $R_f$' are as described above; $R_x$ is hydrogen or a linear or branched alkyl group of between 1 and 10 carbon atoms. An illustrative example, of an alpha-alkoxyalkyl ether group, which is effective as a protecting group in a protected acid group, is methoxy methyl ether (MOM). A protected fluoroalcohol with this particular protecting group can be obtained by reaction of chloromethylmethyl ether with the fluoroalcohol.

Any one of the additional monomers described above may be employed in the polymer of this invention. For example, the fluoroalcohol functional group (protected or unprotected) described herein can be used alone or it can be used in combination with one or more other acid groups, such as carboxylic acid functional group (unprotected) or t-butyl ester of carboxylic acid functional group (protected).

In this invention, often, but not always, the components having protected groups are repeat units having protected acid groups that have been incorporated in the base polymer resins of the compositions. Frequently the protected acid groups are present in one or more comonomer(s) that are polymerized to form the polymer of this invention. Alternatively, in this invention, a polymer can be formed by polymerization with an acid-containing comonomer and then subsequently acid functionality in the resulting acid-containing polymer can be partially or wholly converted by appropriate means to derivatives having protected acid groups.

Photoresist Development

The fluorine-containing polymer of this invention has been found to be useful in a photoresist composition.

The photoresist compositions of this invention contain at least one photoactive component (PAC) that can produce either acid or base upon exposure to actinic radiation during the development process. If an acid is produced upon exposure to actinic radiation, the PAC is termed a photoacid generator (PAG). If a base is produced upon exposure to actinic radiation, the PAC is termed a photobase generator (PBG).

Suitable photoacid generators for this invention include, but are not limited to, 1) sulfonium salts (structure I), 2) iodonium salts (structure II), and 3) hydroxamic acid esters, such as structure III.

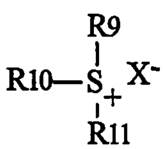

I

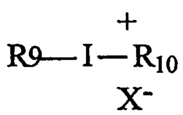

II

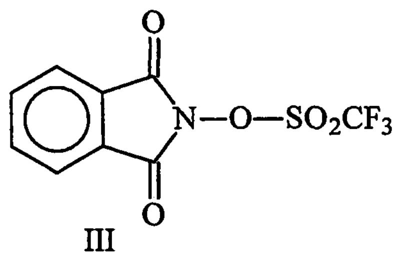

III

In structures II to IV, $R_9$-$R_{11}$ are, independently, substituted or unsubstituted $C_6$ to $C_{20}$ aryl or substituted or unsubstituted $C_7$-$C_{40}$ alkylaryl or aralkyl. Representative aryl groups include phenyl, naphthyl, anthracene and iodonium. Suitable heteroatom substituents include, but are not limited to one or more oxygen atom, nitrogen atom, halogen or sulfur atom. When the heteroatom is oxygen the substituent may contain hydroxyl (-OH) and $C_1$-$C_{20}$ alkyloxy (e.g., $C_{10}H_{21}O$. The anion X- in structures III-IV can be $SbF_6$- (hexafluoroantimonate), $CF_3SO_3$- (trifluoromethylsulfonate = triflate), and $C_4F_9SO_3$- (perfluorobutylsulfonate).

An iodonium photacid generator of particular utility has the following structure:

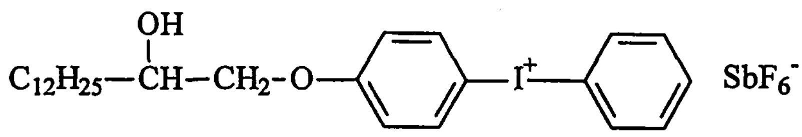

<u>Functionality for Development</u>

For use in a photoresist composition, the fluorine-containing polymer should contain sufficient functionality to render the photoresist developable so as to produce a relief image, following imagewise exposure to ultraviolet radiation having wavelength of ≤365 nm. In some preferred embodiments, the sufficient functionality is selected from an acid and/or a protected acid group, as described above. Such acid or protected acid groups have been found to render the exposed portions of photoresist soluble in basic solution upon exposure to sufficient ultraviolet radiation having a wavelength of ≤365 nm while the unexposed portions are insoluble in the basic solution.

For development, one or more groups within the fluorine-containing polymer should contain one or more components having protected acid groups that can yield, by catalysis of acids or bases generated photolytically from the photoactive compound (PAC), hydrophilic acid or base groups.

A given protected acid group is one that is normally chosen on the basis of its being acid labile, such that when photoacid is produced upon imagewise exposure, the acid will catalyze deprotection and production of hydrophilic acid groups that are necessary for development under aqueous conditions. In addition, the fluorine-containing polymer may also contain acid functionality that is not protected.

Examples of basic developer include sodium hydroxide solution, potassium hydroxide solution, or ammonium hydroxide solution. Specifically a basic developer is an aqueous alkaline liquid such as a wholly aqueous solution containing 0.262 N tetramethylammonium hydroxide (with development at 25°C usually for less than or equal to 120 seconds) or 1% sodium carbonate by weight (with development at a temperature of 30°C usually for less than 2 or equal to 2 minutes).

When an aqueous processable photoresist is coated or otherwise applied to a substrate and imagewise exposed to UV light, development of the photoresist composition may require that the binder material should contain sufficient acid groups (e.g., carboxylic acid groups) and/or protected acid groups that are at least partially deprotected upon exposure to render the photoresist (or other photoimageable coating composition) processable in aqueous alkaline developer.

In one embodiment of the invention in which the polymer has one or more protected acid groups, the polymer yields a carboxylic acid as the hydrophilic group upon exposure to photogenerated acid. Such protected acid groups include A) esters capable of forming, or rearranging to, a tertiary cation, B) esters of lactone, C) acetal esters, D) β-cyclic ketone esters, E) α-cyclic ether esters, and F) MEEMA (methoxy ethoxy ethyl methacrylate) and other esters which are easily hydrolyzable because of anchimeric assistance. Some specific examples in category A) are t-butyl ester, 2-methyl-2-adamantyl ester, and isobornyl ester. Some specific examples in category B) are γ-butyrolactone-3-yl, γ-butyrolactone-2-yl, mavalonic lactone, 3-methyl-γ-butyrolactone-3-yl, 3-tetrahydrofuranyl, and 3-oxocyclohexyl. Some specific examples in category C) are 2-tetrahydropyranyl, 2-tetrahydrofuranyl, and 2,3-propylenecarbonate-1-yl. Additional examples in category C) include various esters from addition of vinyl ethers, such as, for example, ethoxy ethyl vinyl ether, methoxy ethoxy ethyl vinyl ether, and acetoxy ethoxy ethyl vinyl ether.

An especially preferred acidic group is the hexafluoroisopropanol group which may be incorporated by use of hexafluoroisopropanol-containing monomers. Some or all of the hexafluoroisopropanol groups may be protected as, for example, acid-labile alkoxymethyl ethers or tert-butylcarbonates.

Examples of components having protected acid groups that yield an alcohol as the hydrophilic group upon exposure to photogenerated acid or base include t-butoxycarbonyl (t-BOC), t-butyl ether, and 3-cyclohexenyl ether.

In the case of a negative-working photoresist layer, the photoresist layer will be removed during development in portions which are unexposed to UV radiation but will be substantially unaffected in exposed portions during development using either a critical fluid or an organic solvent.

Dissolution Inhibitors and Additives

Various dissolution inhibitors can be utilized in the photoresist composition of this invention. Ideally, dissolution inhibitors (DIs) for far and extreme UV resists (e.g., 193 nm resists) should be designed/chosen to satisfy multiple materials needs including dissolution inhibition, plasma etch resistance, and adhesion behavior of resist compositions comprising a given DI additive. Some dissolution inhibiting compounds may also serve as plasticizers in resist compositions.

A variety of bile-salt esters (i.e., cholate esters) are particularly useful as DIs in the compositions of this invention. Bile-salt esters are known to be effective dissolution inhibitors for deep UV resists, beginning with work by Reichmanis et al. in 1983. (E. Reichmanis et al., "The Effect of Substituents on the Photosensitivity of 2-Nitrobenzyl Ester Deep UV Resists", *J. Electrochem. Soc.* 1983, 130, 1433-1437.) Bile-salt esters are particularly attractive choices as DIs for several reasons, including their availability from natural sources, their possessing a high alicyclic carbon content, and particularly for their being transparent in the deep and vacuum UV region, (which essentially is also the far and extreme UV region), of the electromagnetic spectrum (e.g., typically they are highly transparent at 193 nm). Furthermore, the bile-salt esters are also attractive DI choices since they may be designed to have widely ranging hydrophobic to hydrophilic compatibilities depending upon hydroxyl substitution and functionalization.

Representative bile-acids and bile-acid derivatives that are suitable as additives and/or dissolution inhibitors for this invention include, but are not limited to, those illustrated below, which are as follows: cholic acid (IV), deoxycholic acid (V), lithocholic acid (VI), t-butyl deoxycholate (VII), t-butyl lithocholate (VIII), and t-butyl-3-α-acetyl lithocholate (IX). Bile-acid esters, including compounds VII-IX, are preferred dissolution inhibitors in this invention.

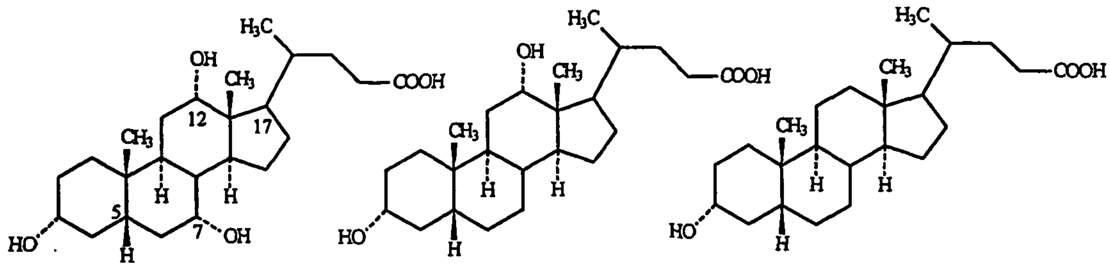

cholic acid IV — deoxycholic acid V — lithocholic acid VI

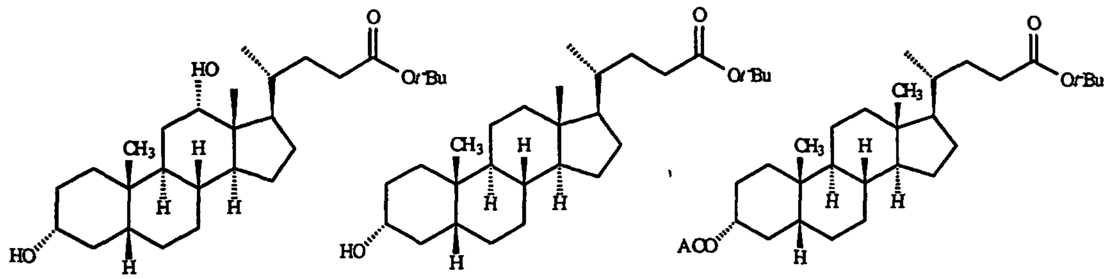

*t*-butyl deoxycholate VII — *t*-butyl lithocholate VIII — *t*-butyl-3α-acetyl lithocholate IX

The invention is not limited to use of bile-acid esters and related compounds as dissolution inhibitors. Other types of dissolution inhibitors, such as various diazonaphthoquinones (DNQs) and diazocoumarins(DCs), can be utilized in this invention in some applications. Diazanaphthoquinones and diazocoumarins are generally suitable in resists compositions designed for imaging at higher wavelengths of UV light (e.g., 365 nm and perhaps at 248 nm). These dissolution inhibitors are generally not preferred in resist compositions designed for imaging with UV light at 193 nm or lower wavelengths, since these compounds absorb strongly in this region of the UV and are usually not sufficiently transparent for most applications at these low UV wavelengths.

Solvents:

The photoresists of this invention may be formulated with a solvent such as chlorobenzene, methyl ethyl ketone,

cyclohexanone or propylene glycol methyl ethyl acetate. A solvent can be chlorobenzene and methyl ethyl ketone or propylene glycol methyl ether acetate and cyclohexanone.

Other Components

The photoresist compositions of this invention can contain optional additional components. Examples of additional components which can be added include, but are not limited to, bases, surfactants, resolution enhancers, adhesion promoters, residue reducers, coating aids, plasticizers, and $T_g$ (glass transition temperature) modifiers.

Process Steps

For microlithography, the photoresist composition of this invention is applied to a suitable substrate such as a microelectronic wafer typically employed in the semiconductor industry. Examples include but are not limited to silicon wafers. The solvent is then dried.

Imagewise Exposure

The photoresist compositions of this invention are sensitive in the ultraviolet region of the electromagnetic spectrum and especially to those wavelengths ≤365 nm. Imagewise exposure of the photoresist compositions of this invention can be done at many different UV wavelengths including 365 nm, 248 nm, 193 nm, 157 nm, and lower wavelengths. Imagewise exposure is preferably done with ultraviolet light of 248 nm, 193 nm, 157 nm, or lower wavelengths; is more preferably done with ultraviolet light of 193 nm, 157 nm, or lower wavelengths; and is still more preferably done with ultraviolet light of 157 nm or lower wavelengths. Imagewise exposure can either be done digitally with a laser or equivalent device or non-digitally with use of a photomask. Digital imaging with a laser is preferred. Suitable laser devices for digital imaging of the compositions of this invention include, but are not limited to, an argon-fluorine excimer laser with UV output at 193 nm, a krypton-fluorine excimer laser with UV output at 248 nm, and a fluorine (F2) laser with output at 157 nm. Since, as discussed supra, use of UV light of lower wavelength for imagewise exposure corresponds to higher resolution (lower resolution limit), the use of a lower wavelength (e.g., 193 nm or 157 nm or lower) is generally preferred over use of a higher wavelength (e.g., 248 nm or higher). Specifically, imaging at 157 nm is preferred over imaging at 193 nm for this reason.

The present photoresists are useful for 365 nm (I-line), 248 nm (KrF laser), and especially 193 nm (ArF laser) and 157 nm (F2 laser) microlithography. These photoresists are critical in allowing for the imaging of feature sizes in the sub-01.0 micrometer range.

GLOSSARY

| Chemicals/Monomers | |
|---|---|
| CFC-113 | 1,1,2-trichlorotrifluoroethane |
| DMF | Dimethylformamide |
| TFE | Tetrafluoroethylene (E. I. du Pont de Nemours and Company, Wilmington, DE) |
| NB | Norbornene = Bicyclo[2.2.1]hept-2-ene Aldrich Chemical Co., Milwaukee, WI |
| NB-TFE | 3,3,4,4-tetrafluoro-tricyclo[4.2.1.$0^{2,5}$]non-7-ene, CAS # 3802-76-4 |
| THF | Tetrahydrofuran Aldrich Chemical Co., Milwaukee, WI |
| Perkadox® 16 N | Di-(4-tert-butylcyclohexyl)peroxydicarbonate Noury Chemical Corp., Burt, NY |
| HFIBO | Hexafluoroisobutylene epoxide |
| TBA | Tertiary-Butyl acrylate |
| General | |
| Extreme UV | Region of the electromagnetic spectrum in the ultraviolet that ranges from 10 nanometers to 200 nanometers |
| Far UV | Region of the electromagnetic spectrum in the ultraviolet that ranges from 200 nanometers to 300 nanometers |
| UV | Ultraviolet region of the electromagnetic spectrum which ranges from 10 nanometers to 390 nanometers |
| Near UV | Region of the electromagnetic spectrum in the ultraviolet that ranges from 300 nanometers to 390 nanometers |

Table continued

| General | |
|---|---|
| $M_n$ | Number-average molecular weight of a given polymer |
| $M_w$ | Weight-average molecular weight of a given polymer |
| $P = M_w/M_n$ | Polydispersity of a given polymer |
| Absorption coefficient | AC = A/b, where A, absorbance, = $Log_{10}(1/T)$ and b = film thickness in microns, where T = transmittance as defined below. |
| Transmittance | Transmittance, T, = ratio of the radiant power transmitted by a sample to the radiant power incident on the sample and is measured for a specified wavelength $\mu$. |
| $T_g$ | Glass Transition Temperature |

EXAMPLES

All temperatures are in degrees Centigrade, all mass measurements are in grams, and all percentages are weight percentages except for polymer compositions which are mole percentages.

Glass transition temperatures ($T_g$s) were determined by DSC (differential scanning calorimetry) using a heating rate of 20°C/min, data is reported from the second heat. The DSC unit used is a Model DSC2910 made by TA Instruments, Wilmington, DE.

EXAMPLES

Comparative Example 1A: TFE/Norbornene Copolymer:

A 400 mL stainless steel pressure vessel was charged with a solution of 33 g (0.35 mol) norbornene in 120 mL of CFC-113. Perkadox® 16 N (1.20 g) was added. The vessel was closed, purged with nitrogen, cooled, evacuated and charged with 40 g (0.40 mol) TFE. The vessel was heated with shaking to 50°C and maintained for 18 hr with the internal pressure decreasing from 200 psi to 167 psi (1.38 $10^6$ Pa to 1.15 $10^6$Pa). The vessel was cooled, vented and the liquid contents recovered using additional CFC-113 to rinse. Polymer was isolated by precipitation of the CFC-113 solution into excess methanol. The white solid was filtered and dried in a vacuum oven overnight at about 65°C. Isolated yield was 29.7 g (41%) of white polymer; GPC (MEK) Mw 10000, Mn 2900, Mw/Mn 3.57. Anal. Found: C, 54.60; H, 5.05; F, 31.21. From the % C, the composition of the polymer was calculated as 52 mol % TFE and 48 mol % norbornene.

Comparative Example 1B: TFE/Norbornene Copolymer:

A sample of another TFE/norbornene copolymer was prepared by the procedure of Comparative Example 1A using 47 g (0.5 mol) norbomene, 120 mL CFC-113, 1.6 g Perkadox® 16N and 50 g (0.50 mol) TFE with polymerization conducted at 40°C for 18 hr. There was isolated 19.7 g (20%) of white polymer; GPC (MEK) Mw 10600, Mn 3700; Mw/Mn 2.89; Inh. Visc. 0.0195 (MEK). Anal. Found: C, 58.33; H, 5.63; F, 33.13. From the % C analysis, composition of the polymer was calculated as 46 mol % TFE and 54 mol % norbornene. Its glass transition temperature was found to be 152 °C by DSC and its absorbance at 157 nm was found to be 1.3 $\mu m^{-1}$, demonstrating that this copolymer has a lower glass transition temperature and inferior transparency as compared to the polymers of Example 1 below.

Preparation of the NB-TFE monomer used in the Following Examples:

A NB-TFE monomer was prepared by substantially the same process as described in example 1 of U.S. 2,928,865 by reaction of tetrafluoroethylene (1 equivalent) and norbornadiene (1.25 equivalents) at 180°C for 8 hours in a sealed metal pressure vessel. The product was purified by spinning band distillation to provide pure cuts of the tricyclic comonomer (and having a boiling point of 67°C at 45 mmHg).

Example 1: Synthesis of a polymer from the Monomers TFE and NB-TFE

A 200 mL stainless steel pressure vessel was charged with 46.1 g of NB-TFE, 75 mL of 1,1,2-trichlorotrifluoroethane and 1.0 g of Perkadox® 16N initiator. The vessel was closed, cooled in dry ice, evacuated and charged with 36 g of tetrafluoroethylene (TFE). The vessel was then agitated with its contents at 50 °C for 18 hr. The vessel was cooled to room temperature and vented to one atmosphere. The translucent, gel-like solution was removed from the vessel using additional 1,1,2-trichlorotrifluoroethane to rinse. The mass was allowed to air-dry. The polymer was dissolved

in tetrahydrofuran and precipitated into excess methanol. The solid was dried in a vacuum oven at 85°C giving 18.0 g of white polymer; GPC (MEK) Mn 9400, Mw 13100; Mw/Mn 1.40; Tg 228°C (DSC). Anal. Found: C, 46.26; H, 2.90; F, 49.80. $^{19}F$ NMR -95 to - 122 (multiplets, 4F from TFE and 2 F from NB-TFE), -124.4 (dd, 2F from NB-F-OH). From integration of the spectrum, the polymer composition was calculated to be 53 % TFE and 47 % NB-TFE. The absorbance at 157 nm was found to be 0.69 $\mu m^{-1}$ from measurements on spin cast films of 88.4 and 102.9 nm thickness.

Example 2: Synthesis of a Polymer from the Monomers TFE, norbornene and NB-TFE:

The procedure of Example 1 was followed using 11.3 g of norbornene, 23.0 g NB-TFE, 75 mL of 1,1,2-trichlorotrifluoroethane, 1.0 g of Perkadox® 16N and 36 g of TFE. The clear solution from the polymerization was added to excess methanol. The precipitated polymer was dissolved in tetrahydrofuran and precipitate by adding the solution to excess methanol. After drying, there was obtained 21.2 g of white polymer; GPC (MEK) Mn 6000, Mw 10500; Mw/Mn 1.73; Tg 166 °C (DSC). Anal. Found: C, 53.07; H, 4.48; F, 41.80. $^{19}F$ NMR -95 to - 122 (multiplets, 4F from TFE and 2 F from NB-TFE), -124.4 (dd, 2F from NB-F-OH). From integration of the spectrum, the ratio of TFE to NB-TFE in the polymer was found to be 74:26.

Example 3: Synthesis of a Polymer from the Monomers TFE, NB-F-OH and NB-TFE :

The monomer NB-F-OH was prepared using the following procedure:

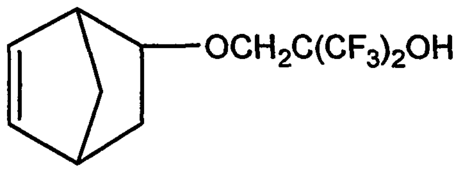

NB-F-OH

A dry round bottom flask equipped with mechanical stirrer, addition funnel and nitrogen inlet was swept with nitrogen and charged with 19.7 g (0.78 mol) of 95% sodium hydride and 500 mL of anhydrous DMF. The stirred mixture was cooled to 5°C and 80.1 g (0.728 mol) of exo-5-norbornen-2-ol was added dropwise so that the temperature remained below 15°C. The resulting mixture was stirred for 1 hr. HFIBO (131 g, 0.728 mol) (prepared as described in accordance with the procedure of Example 1 of PCT Int. Appl. WO 00/66575 A2 Published on November 11, 2001) was added dropwise at room temperature. The resulting mixture was stirred overnight at room temperature. Methanol (40 mL) was added and most of the DMF was removed on a rotary evaporator under reduced pressure. The residue was treated with 200 mL water and glacial acetic acid was added until the pH was about 8.0. The aqueous mixture was extracted with 3 X 150 mL ether. The combined ether extracts were washed with 3 X 150 mL water and 150 mL brine, dried over anhydrous sodium sulfate and concentrated on a rotary evaporator to an oil. Kugelrohr distillation at 0.15-0.20 torr and a pot temperature of 30-60 °C gave 190.1 (90%) of product. $^{1}H$ NMR ($\delta$, $CD_2Cl_2$) 1.10 -1.30 (m, 1 H), 1.50 (d, 1H), 1.55-1.65 (m, 1H), 1.70 (s, 1 H), 1.75 (d, 1 H), 2.70 (s, 1H), 2.85 (s, 1 H), 3.90 (d, 1H), 5.95 (s, 1H), 6.25 (s, 1H). Another sample prepared in the same fashion was submitted for elemental analysis. Calcd. for $C_{11}H_{12}F_6O_2$: C, 45.53; H, 4.17; F, 39.28. Found: C, 44.98; H, 4.22; F, 38.25.

Example 4: Synthesis of a Polymer from the Monomers TFE, NB-F-OH and NB-TFE :

The procedure of Example 1 was followed using 52.3 g of NB-F-OH, 11.5 g of NB-TFE, 75 mL of 1,1,2-trichlorotrifluoroethane, 1.0 g of Perkadox® 16N and 36 g of TFE. The clear solution from the polymerization was added to excess hexane. The precipitated polymer was dried in a vacuum oven giving 12.0 g of white polymer; GPC (MEK) Mn 4800, Mw 6900; Mw/Mn 1.45; Tg 149°C (DSC). Anal. Found: C, 42.10; H, 3.42; F, 45.22. $^{19}F$ NMR -75.6 (s, 6F from NB-F-OH), -95 to -122 (multiplets, 4F from TFE and 2 F from NB-TFE), -124.4 (dd, 2F from NB-TFE). From integration of the spectrum, the polymer composition was calculated to be 45% TFE, 47 % NB-F-OH and 8% NB-TFE. The absorbance at 157 nm was found to be 0.84 $\mu m^{-1}$ from measurements on spin cast films of 291.2 and 235.1 nm thickness.

Example 5: Synthesis of a polymer from the Monomers TFE, NB-F-OH, NB-TFE and tert-Butyl Acrylate: The procedure of Example 1 was followed using 40.0 g of NB-F-OH, 5.8 g of NB-TFE, 1.54 g of tert-butyl acrylate, 75 mL of 1,1,2-trichlorotrifluoroethane, 0.6 g of Perkadox® 16N and 42 g of TFE. The clear solution from the polymerization was added to excess hexane. The precipitated polymer was dried in a vacuum oven giving 12.0 g of white polymer; GPC (MEK) Mn 6200, Mw 9500; Mw/Mn 1.53; Tg 146°C (DSC). Anal. Found: C, 44.36; H, 4.00; F, 40.16. $^{19}F$ NMR -75.6 (s,

6F from NB-F-OH), -95 to -122 (multiplets, 4F from TFE and 2 F from NB-TFE), -124.4 (dd, 2F from NB-F-OH). From analysis of its $^{13}C$ NMR spectrum, the polymer composition was calculated to be 41 % TFE, 39 % NB-F-OH, 5% NB-TFE and 16 % tert-butyl acrylate. The absorbance at 157 nm was found to be 1.73 $\mu m^{-1}$ from measurements on spin cast films of 101.9 and 88.7 nm thickness.

Example 6. Synthesis of a Polymer from the Monomers TFE, NB-F-OH, NB-F-O-MOM and NB-TFE. The procedure of Example 1 was followed using 34.8 g of NB-F-OH, 30.1 g of NB-F-O-MOM (the methoxy methyl ether protected version of NB-F-OH, prepared by reaction of NB-F-OH with chloromethyl methyl ether in the presence of base), 5.8 g of NB-TFE, 75 mL of 1,1,2-trichlorotrifluoroethane, 1.0 g of Perkadox® 16N and 36 g of TFE. The clear solution from the polymerization was added to excess hexane. The precipitated polymer was dried in a vacuum oven giving 10.4 g of white polymer; GPC (MEK) Mn 5100, Mw 6900; Mw/Mn 1.35; Tg 121°C (DSC). Anal. Found: C, 41.91; H, 3.50; F, 41.86. $^{19}F$ NMR -75.6 (s, 6F from NB-F-OH), -73.8 (s, 6F from NB-F-OMOM) -95 to -122 (multiplets, 4F from TFE and 2 F from NB-TFE), -124.4 (dd, 2F from NB-F-OH). From integration of its $^{13}C$ NMR spectrum, the polymer composition was calculated to be 49% TFE, 26 % NB-F-OH, 19 % NB-F-OMOM and 6% NB-TFE. The absorbance at 157 nm was found to be 1.11 $\mu m^{-1}$ from measurements on spin cast films of 100.2 and 87.2 nm thickness.

Example 7. Synthesis of a homopolymer from the Monomer NB-TFE.

Under nitrogen, $[(\eta^3\text{-}C_4H_7)PdCl]_2$ (0.338 g, 0.862 mmol) and $AgSbF_6$ (0.596 g, 17.2 mmol) were dissolved in 20 mL chlorobenzene. The resulting mixture was stirred at room temperature for 40 minutes, during which time AgCl precipitated from the reaction mixture. The reaction mixture was filtered, and the filtrate added to a solution of NB-TFE (16.56 g, 86.2 mmol) in 100 mL chlorobenzene. The resulting solution was stirred for six days at room temperature, and poly(NB-TFE) was then isolated by precipitation in hexane (500 mL) followed by filtration and drying under vacuum. Yield of poly(NB-TFE) = 6.4 grams. Spectroscopic data was consistent with the vinyl addition polymer depicted below:

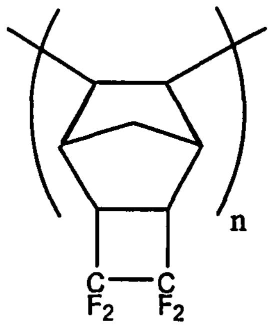

Fluorine NMR showed two multiplets in a 1:1 ratio: $^{19}F$ NMR (acetone-$d_6$) -111.9 (mult), -125.3 (mult). GPC: $M_n$ = 9340; $M_w$ = 24425; $M_w/M_n$ = 2.62. A 5 weight % solution in 2-heptanone was made for spin-coating, film sample(s) were spin coated, and the absorption coefficient at 157 nm was measured to give the following result: Abs @ 157 nm = 2.63 $\mu m^{-1}$. The absorption at 157 nm measured for poly(NB-TFE) is several orders of magnitude less than that reported for poly (norbornene) itself: for poly(norbomene), Abs @ 157 nm = 6.1 $\mu m^{-1}$ [see R. R. Kunz, T. M. Bloomstein, D. E. Hardy, R. B. Goodman, D. K. Downs, and J. E. Curtin, "Outlook for 157-nm resist design", in Proc. SPIE-Int. Soc. Opt. Eng., 3678 (Pt. 1, Advances in Resist Technology and Processing XVI), pages 13-23, 1999.

Example 8. Imaging using a poly(TFE/NB-F-OH/NB-TFE/tert-Butyl Acrylate).

The following formulation was prepared and magnetically stirred overnight:

| Component | Wt. (gm) |
|---|---|
| poly(TFE/NB-F-OH/NB-TFE/tBA) (41/39/5/16, as analyzed by $^{13}C$ NMR), as prepared in Example 5 | 0.483 |
| 2-Heptanone | 4.268 |
| 6.82% (wt) solution of triphenylsulfonium nonaflate dissolved in 2-heptanone which had been filtered through a 0.45µ PTFE syringe filter. | 0.249 |

Spin coating was done using a Brewer Science Inc. Model-100CB combination spin coater/hotplate on a 4 in. diameter Type "P", <100> orientation, silicon wafer. Development was performed on a Litho Tech Japan Co. Resist

Development Analyzer (Model-790).

The wafer was prepared by depositing 5 mL of hexamethyldisilazane (HMDS) primer and spinning at 5000 rpm for 10 sec. Then 1-3 ml of the above solution, after filtering through a 0.45 μm PTFE syringe filter, was deposited and spun at 3000 rpm for 60 seconds and baked at 120°C for 60 seconds.

248 nm imaging was accomplished by exposing the coated wafer to light obtained by passing broadband UV light from an ORIEL Model-82421 Solar Simulator (1000 watt) through a 248 nm interference filter which passes about 30% of the energy at 248 nm. Exposure time was 180 seconds, providing an unattenuated dose of 123 mJ/cm$^2$. By using a mask with 18 positions of varying neutral optical density, a wide variety of exposure doses were generated. After exposure the exposed wafer was baked at 120°C for 120 seconds. The wafer was developed in aqueous tetramethylammonium hydroxide (TMAH) solution (OHKA NMD-3, 2.38% aqueous TMAH) for 60 seconds, providing a positive image pattern with a clearing dose of about 26 mJ/cm$^2$.

Example 9. Imaging using a poly(TFE/NB-F-OH/NB-TFE/tert-Butyl Acrylate).

The following formulation was prepared and magnetically stirred overnight:

| Component | Wt. (gm) |
|---|---|
| poly(TFE/NB-F-OH/NB-TFE/tBA) (41/39/5/16, as analyzed by $^{13}$C NMR), as prepared in Example 5 | 0.433 |
| 2-Heptanone | 4.268 |
| Tertiary-Butyl Lithocholate | 0.050 |
| 6.82% (wt) solution of triphenylsulfonium nonaflate dissolved in 2-heptanone which had been filtered through a 0.45μ PTFE syringe filter. | 0.249 |

Processing was performed as in Example 8. A positive image pattern was obtained with a clearing dose of about 10 mJ/cm$^2$.

Example 10. Imaging using a poly(TFE/NB-F-OH/NB-F-O-MOM/NB-TFE).

The following formulation was prepared and magnetically stirred overnight:

| Component | Wt. (gm) |
|---|---|
| poly(TFE/NB-F-OH/NB-TFE/NB-F-OMOM) (49/26/6/19, as analyzed by $^{13}$C NMR), as prepared in Example 6 | 0.483 |
| 2-Heptanone | 4.268 |
| 6.82% (wt) solution of triphenylsulfonium nonaflate dissolved in 2-heptanone which had been filtered through a 0.45μ PTFE syringe filter. | 0.249 |

Processing was performed as in Example 8, with the exception that exposure time was 30 seconds, providing an unattenuated dose of 20.5 mJ/cm$^2$,, and post-exposure bake temperature was 100°C. A positive image pattern was obtained with a dose of about 4.3 mJ/cm$^2$ showing partial clearing.

Example 11. Imaging using a poly(TFE/NB-F-OH/NB-F-O-MOM/NB-TFE).

The following formulation was prepared and magnetically stirred overnight:

| Component | Wt. (gm) |
|---|---|
| poly(TFE/NB-F-OH/NB-TFE/NB-F-OMOM) | (49/26/6/19, as |
| analyzed by $^{13}$C NMR), | |
| as prepared in Example 6 | 0.408 |
| 2-Heptanone | 4.268 |
| Tertiary-Butyl Lithocholate | 0.075 |
| 6.82% (wt) solution of triphenylsulfonium nonaflate dissolved in 2-heptanone which had been filtered through a 0.45μ PTFE syringe filter. | 0.249 |

Processing was performed as in Example 8. A positive image pattern was obtained with a clearing dose of

about 34 $mJ/cm^2$.

## Claims

1. A fluorine-containing polymer comprising a repeat unit derived from at least one ethylenically unsaturated polycyclic compound of structure 1:

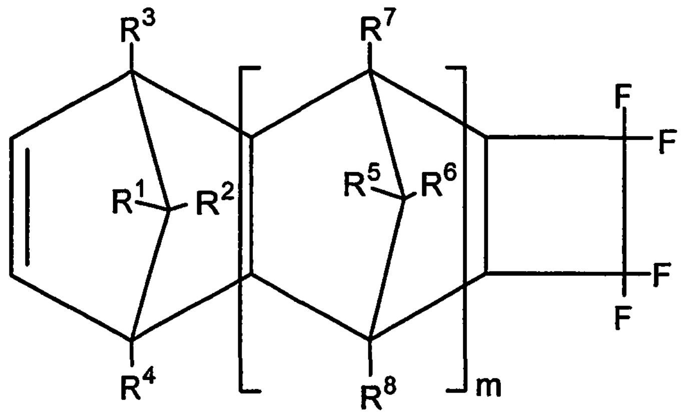

1

wherein:

$R^1$ to $R^8$ are the same or different and each represents a hydrogen atom, a halogen atom, a carboxyl group, a hydrocarbon group of 1 to 20 carbon atoms or a substituted hydrocarbon group of 1 to 20 carbon atoms and at least one oxygen, sulfur or nitrogen atom; and
m is 0, 1, or 2.

2. The fluorine-containing polymer of Claim 1 wherein $R^1$ to $R^8$ are each hydrogen atoms and m is zero.

3. The fluorine-containing polymer of claim 1 further comprising a repeat unit derived from a fluoroolefin.

4. The fluorine-containing polymer of Claim 3 wherein the fluoroolefin is tetrafluoroethylene, chlorotrifluoroethylene, hexafluoropropylene, trifluoroethylene, vinylidene fluoride, vinyl fluoride, perfluoro-(2,2-dimethyl-1,3-dioxole), perfluoro-(2-methylene-4-methyl-1,3-dioxolane, $CF_2=CFO(CF_2)_tCF=CF_2$, where t is 1 or 2, or $R_fOCF=CF_2$ wherein $R_f$ is a saturated fluoroalkyl group of from 1 to 10 carbon atoms.

5. The fluorine-containing polymer of Claim 1 further comprising a fluoroalcohol group derived from at least one ethylenically unsaturated compound containing a fluoroalcohol group having the structure:

$$-C(R_f)(R_f')OH$$

wherein $R_f$ and $R_f'$ are the same or different fluoroalkyl groups of from 1 to 10 carbon atoms or taken together are $(CF_2)_n$ wherein n is 2 to 10. These fluoroalkyl groups are designated as $R_f$ and $R_f'$, which can be partially fluorinated alkyl groups or fully fluorinated alkyl groups (i.e., perfluoroalkyl groups).

6. The fluorine containing polymer of claim 1 further comprising an acid-containing monomer of the structure:

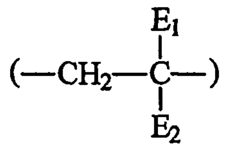

in which $E_1$ is H or $C_1$-$C_{12}$ alkyl; $E_2$ is $CO_2E_3$, $SO_3E$, or other acidic group; and E and $E_3$ are H or $C_1$-$C_{12}$ alkyl, which is unsubstituted or heteroatom substituted.

**7.** A photoresist comprising

(I) a fluorine-containing polymer comprising a repeat unit derived from at least one ethylenically unsaturated polycyclic compound of structure 1:

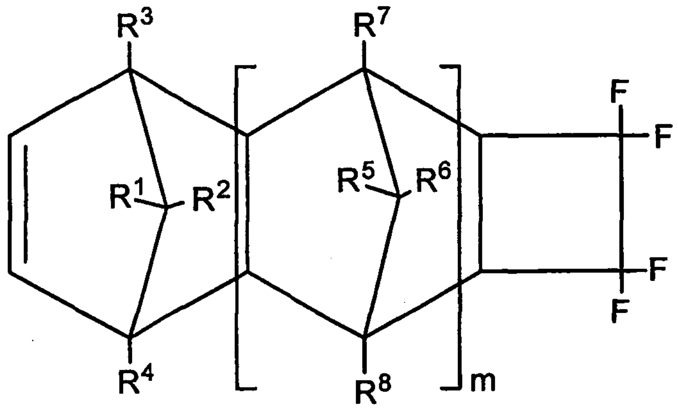

**1**

wherein:

$R^1$ to $R^8$ are the same or different and each represents a hydrogen atom, a halogen atom, a carboxyl group, a hydrocarbon group of 1 to 20 carbon atoms or a substituted hydrocarbon group of 1 to 20 carbon atoms and at least one oxygen, sulfur or nitrogen atom;
m is 0, 1, or 2; and

(II) a photoactive component.

**8.** The photoresist of Claim 7 wherein $R^1$ to $R^8$ are each hydrogen atoms and m is zero.

**9.** The photoresist of Claim 7 wherein the fluorine-containing polymer further comprises a fluoroolefin.

**10.** The photoresist of Claim 9 wherein the fluoroolefin is tetrafluoroethylene, chlorotrifluoroethylene, hexafluoropropylene, trifluoroethylene, vinylidene fluoride, vinyl fluoride, perfluoro--(2,2-dimethyl-1,3-dioxole), perfluoro-(2-methylene-4-methyl-1,3-dioxolane, $CF_2$=$CFO(CF_2)_tCF$=$CF_2$, where t is 1 or 2, or $R_fOCF$=$CF_2$ wherein $R_f$ is a saturated fluoroalkyl group of from 1 to 10 carbon atoms.

**11.** The photoresist of Claim 7 wherein the fluorine-containing polymer further comprises a fluoroalcohol group derived from at least one ethylenically unsaturated compound containing a fluoroalcohol group having the structure:

$$-C(R_f)(R_f')OH$$

wherein $R_f$ and $R_f$' are the same or different fluoroalkyl groups of from 1 to about 10 carbon atoms or taken together are $(CF_2)_n$ wherein n is 2 to 10. These fluoroalkyl groups are designated as $R_f$ and $R_f$', which can be partially

fluorinated alkyl groups or fully fluorinated alkyl groups (i.e., perfluoroalkyl groups).

**12.** The photoresist of Claim 7 wherein the fluorine-containing polymer further comprises an acid-containing monomer of the structure:

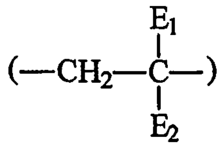

in which $E_1$ is H or $C_1$-$C_{12}$ alkyl; $E_2$ is $CO_2E_3$, $SO_3E$, or other acidic group; and E and $E_3$ are H or $C_1$-$C_{12}$ alkyl, which is unsubstituted or heteroatom substituted.

**13.** The photoresist of Claim 7 further comprising a solvent.

**14.** The photoresist of Claim 7 further comprising a dissolution inhibitor.

**15.** The photoresist of Claim 7 wherein the photoactive component is a photoacid generator.

**16.** A process for preparing a photoresist image on a substrate comprising, in order:

(W) applying a photoresist composition on a substrate, wherein the photoresist comprises:

(I) the fluorine-containing polymer of Claim 1,
(II) a photoactive component, and
(III) a solvent;

(X) drying the coated photoresist composition to substantially remove the solvent and thereby to form a photoresist layer on the substrate;
(Y) imagewise exposing the photoresist layer to form imaged and non-imaged areas; and
(Z) developing the exposed photoresist layer having imaged and non-imaged areas to form the relief image on the substrate.

**17.** The process of Claim 16 wherein the exposed layer is developed with an aqueous alkaline developer.

**18.** An article of manufacture comprising a substrate having coated thereon a photoresist composition comprising:

(I) a fluorine-containing polymer comprising a repeat unit derived from at least one ethylenically unsaturated polycyclic compound of structure 1:

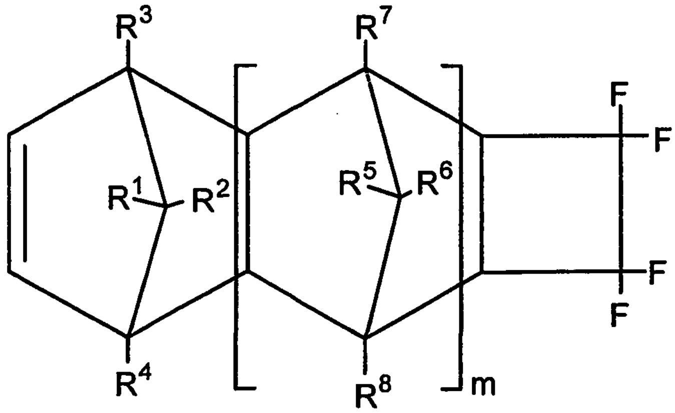

1

wherein:

$R^1$ to $R^8$ are the same or different and each represents a hydrogen atom, a halogen atom, a carboxyl group, a hydrocarbon group of 1 to 20 carbon atoms or a substituted hydrocarbon group of 1 to 20 carbon atoms and at least one oxygen, sulfur or nitrogen atom; and
m is 0, 1, or 2, and

(II) a photoactive component.

**19.** The article of Claim 18 wherein the substrate is a microelectronic wafer.

**20.** A polymer comprising the polymerization product of a cycloaddition reaction product of a bicyclo-[2.2.1]hepta-1,5-diene and a fluoroolefin selected from the group consisting of tetrafluoroethylene and chlorotrifluoroethylene.

**Patentansprüche**

**1.** Fluor enthaltendes Polymer, aufweisend eine repetierende Einheit, die deriviert ist von mindestens einer ethylenisch ungesättigten, polycyclischen Verbindung der Struktur 1:

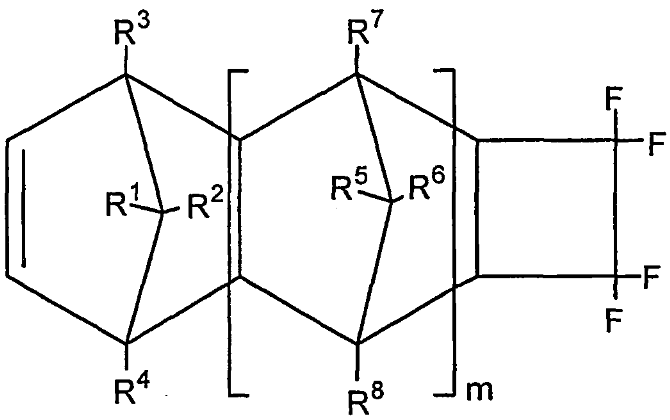

1

worin sind:

$R^1$ bis $R^8$ gleich oder verschieden und jeweils ein Wasserstoffatom, ein Halogenatom, eine Carboxyl-Gruppe, eine Kohlenwasserstoff-Gruppe mit 1 bis 20 Kohlenstoffatomen oder eine substituierte Kohlenwasserstoff-Gruppe mit 1 bis 20 Kohlenstoffatomen und mindestens einem Sauerstoff-, Schwefel- oder Stickstoffatom; und m beträgt 0, 1 oder 2.

**2.** Fluor enthaltenes Polymer nach Anspruch 1, worin $R^1$ bis $R^8$ jeweils Wasserstoffatome sind und m Null beträgt.

**3.** Fluor enthaltenes Polymer nach Anspruch 1, ferner aufweisend eine repetierende Einheit, die von einem Fluorolefin deriviert ist.

**4.** Fluor enthaltendes Polymer nach Anspruch 3, worin das Fluorolefin Tetrafluorethylen ist, Chlortrifluorethylen, Hexafluorpropylen, Trifluorethylen, Vinylidenfluorid, Vinylfluorid, Perfluor-(2,2-dimethyl-1,3-dioxol), Perfluor-2-methylen-4-methyl-1,3-dioxolan, $CF_2=CFO(CF_2)_tCF=CF_2$, worin t 1 oder 2 beträgt, oder $R_fOCF=CF_2$, worin $R_f$ eine gesättigte Fluoralkyl-Gruppe mit 1 bis 10 Kohlenstoffatomen ist.

**5.** Fluor enthaltendes Polymer nach Anspruch 1, ferner aufweisend eine Fluoralkohol-Gruppe, deriviert von mindestens einer ethylenisch ungesättigten Verbindung, die eine Fluoralkohol-Gruppe hat mit der Struktur:

$$-C(R_f)(R_f')OH$$

worin $R_f$ und $R_f'$ gleiche oder verschiedene Fluoralkyl-Gruppen mit 1 bis 10 Kohlenstoffatomen sind oder zusammengenommen $(CF_2)_n$, worin n 2 bis 10 beträgt, wobei diese Fluoralkyl-Gruppen als $R_f$ und $R_f'$ bezeichnet werden, die teilfluorierte Alkyl-Gruppen oder vollständig fluorierte Alkyl-Gruppen sein können (d.h. Perfluoralkyl-Gruppen.

**6.** Fluor enthaltendes Polymer nach Anspruch 1, ferner aufweisend ein Säure enthaltendes Monomer der Struktur:

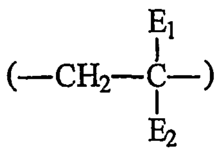

worin $E_1$ H ist oder $C_1$-$C_{12}$-Alkyl; $E_2$ ist $CO_2E_3$, $SO_3E$ oder eine andere saure Gruppe; und E und $E_3$ sind H oder $C_1$-$C_{12}$-Alkyl, das unsubstituiert ist oder Heteroatom-substituiert.

**7.** Photoresist, aufweisend:

(I) ein Fluor enthaltendes Polymer, das eine repetierende Einheit aufweist, die deriviert ist von mindestens einer ethylenisch ungesättigten, polycyclischen Verbindung der Struktur 1:

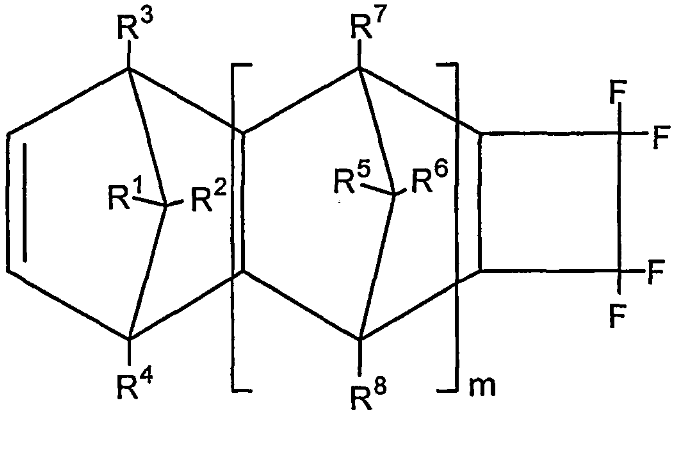

1

worin sind:

$R^1$ bis $R^8$ gleich oder verschieden und jeweils ein Wasserstoffatom, ein Halogenatom, eine Carboxyl-Gruppe, eine Kohlenwasserstoff-Gruppe mit 1 bis 20 Kohlenstoffatomen oder eine substituierte Kohlenwasserstoff-Gruppe mit 1 bis 20 Kohlenstoffatomen und mindestens einem Sauerstoff-, Schwefel- oder Stickstoffatom; und m beträgt Null, 1 oder 2 und

(II) eine photoaktive Komponente.

**8.** Photoresist nach Anspruch 7, worin $R^1$ bis $R^8$ jeweils Wasserstoffatome sind und m Null beträgt.

**9.** Photoresist nach Anspruch 7, worin das Fluor enthaltende Polymer ferner ein Fluorolefin aufweist.

**10.** Photoresist nach Anspruch 9, worin das Fluorolefin Tetrafluorethylen ist, Chlortrifluorethylen, Hexafluorpropylen, Trifluorethylen, Vinylidenfluorid, Vinylfluorid, Perfluor-(2,2-dimethyl-1,3-dioxol), Perfluor-2-methylen-4-methyl-1,3-dioxolan, $CF_2=CFO(CF_2)_tCF=CF_2$, worin t 1 oder 2 beträgt, oder $R_fOCF=CF_2$, worin $R_f$ eine gesättigte Fluoralkyl-Gruppe mit 1 bis 10 Kohlenstoffatomen ist.

**11.** Photoresist nach Anspruch 7, worin das Fluor enthaltende Polymer ferner eine Fluoralkohol-Gruppe aufweist, die deriviert ist von mindestens einer ethylenisch ungesättigten Verbindung, die eine Fluoralkyl-Gruppe mit der Struktur enthält:

$$-C(R_f)(R_f')OH$$

worin $R_f$ und $R_f$' gleiche oder verschiedene Fluoralkyl-Gruppen mit 1 bis 10 Kohlenstoffatomen sind oder zusammengenommen $(CF_2)_n$ sind, worin n 2 bis 10 beträgt, wobei diese Fluoralkyl-Gruppen als $R_f$ und $R_f$' bezeichnet werden, die teilfluorierte Alkyl-Gruppen oder vollständig fluorierte Alkyl-Gruppen sein können (d.h. Perfluoralkyl-Gruppen).

**12.** Photoresist nach Anspruch 7, worin das Fluor enthaltende Polymer ferner ein Säure enthaltendes Comonomer der Struktur aufweist:

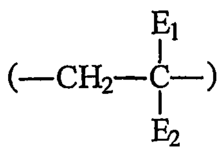

worin $E_1$ H ist oder $C_1$-$C_{12}$-Alkyl; $E_2$ ist $CO_2E_3$, $SO_3E$ oder eine andere saure Gruppe; und E und $E_3$ sind H oder $C_1$-$C_{12}$-Alkyl, das unsubstituiert ist oder Heteroatom-substituiert.

**13.** Photoresist nach Anspruch 7, ferner aufweisend ein Lösemittel.

**14.** Photoresist nach Anspruch 7, ferner aufweisend einen Auflösungsinhibitor.

**15.** Photoresist nach Anspruch 7, worin die photoaktive Komponente ein Photosäure-Erzeuger ist.

**16.** Verfahren zum Herstellen eines Photoresist-Bildes auf einem Substrat, umfassend in der Reihenfolge:

(W) Auftragen einer Photoresist-Zusammensetzung auf ein Substrat, wobei der Photoresist aufweist:

(I) das Fluor enthaltende Polymer nach Anspruch 1,
(II) eine photoaktive Komponente und
(III) ein Lösemittel;

(X) Trocknen der beschichteten Photoresist-Zusammensetzung, um das Lösemittel weitgehend zu entfernen und dadurch eine Photoresist-Schicht auf dem Substrat zu erzeugen;

(Y) bildweise Exponieren der Photoresist-Schicht, um mit Abbildung versehene und abbildungsfreie Bereiche zu erzeugen; und

(Z) Entwickeln der exponierten Photoresist-Schicht mit den mit Abbildung versehenen Bereichen und den abbildungsfreien Bereichen, um ein Reliefbild auf dem Substrat zu erzeugen.

**17.** Verfahren nach Anspruch 16, bei welchem die exponierte Schicht mit einem wässrigen alkalihaltigen Entwickler entwickelt wird.

**18.** Fertigungsartikel, aufweisend ein Substrat mit darauf aufgetragener Photoresist-Zusammensetzung, die aufweist:

(I) ein Fluor enthaltendes Polymer, das eine repetierende Einheit aufweist, die mindestens deriviert ist von einer ethylenisch ungesättigten, polycyclischen Verbindung der Struktur 1:

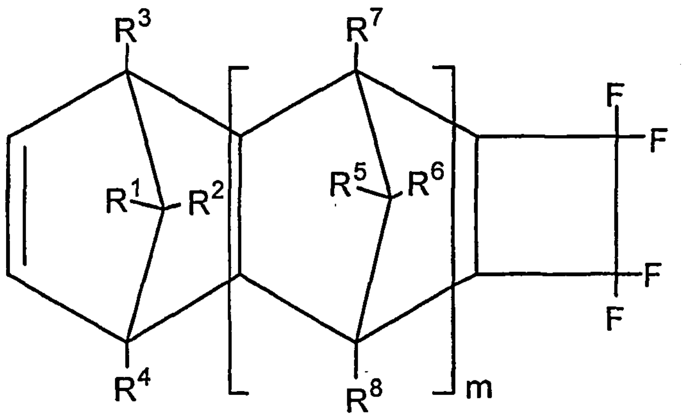

1

worin sind:

$R^1$ bis $R^8$ gleich oder verschieden und jeweils ein Wasserstoffatom, ein Halogenatom, eine Carboxyl-Gruppe, eine Kohlenwasserstoff-Gruppe mit 1 bis 20 Kohlenstoffatomen oder eine substituierte Kohlenwasserstoff-Gruppe mit 1 bis 20 Kohlenstoffatomen und mindestens einem Sauerstoff-, Schwefel- oder Stickstoffatom; und

m beträgt Null, 1 oder 2, und

(II) eine photoaktive Komponente.

**19.** Artikel nach Anspruch 18, wobei das Substrat ein mikroelektronischer Wafer ist.

**20.** Polymer, aufweisend das Polymerisationsprodukt eines Reaktionsproduktes der Cycloaddition von einem Bicyclo-[2.2.1]hepta-1,5-dien und einem Fluorolefin, ausgewählt aus der Gruppe, bestehend aus Tetrafluorethylen und Chlortrifluorethylen.

## Revendications

**1.** Polymère contenant du fluor, comprenant une unité récurrente dérivée d'au moins un composé polycyclique à insaturation éthylénique ayant la structure 1 :

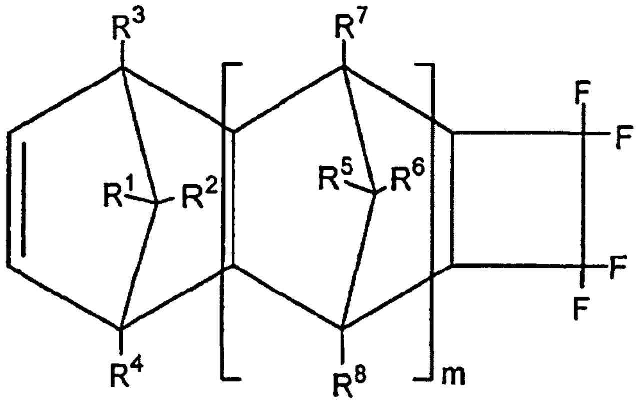

1

dans laquelle :

$R^1$ à $R^8$ sont identiques ou différents et chacun représente un atome d'hydrogène, un atome d'halogène, un groupement carboxyle, un groupement hydrocarboné de 1 à 20 atomes de carbone ou un groupement hydrocarboné substitué de 1 à 20 atomes de carbone et au moins un atome d'oxygène, de soufre ou d'azote; et m est égal à 0, 1 ou 2.

**2.** Polymère contenant du fluor selon la revendication 1, dans lequel $R^1$ à $R^8$ sont chacun des atomes d'hydrogène et m est zéro.

**3.** Polymère contenant du fluor selon la revendication 1, comprenant en outre une unité récurrente dérivée d'une fluorooléfine.

**4.** Polymère contenant du fluor selon la revendication 3, dans lequel la fluorooléfine est le tétrafluoroéthylene, le chlorotrifluoroéthylène, l'hexafluoropropylène, le trifluoroéthylène, le fluorure de vinylidène, le fluorure de vinyle, le perfluoro-(2,2-diméthyl-1,3-dioxole), le perfluoro-(2-méthylène-4-méthyl-1,3-dioxolane), $CF_2=CFO(CF_2)_tCF=CF_2$, où t est 1 ou 2, ou $R_fOCF=CF_2$, où $R_f$ est un groupement fluoroalkyle saturé de 1 à 10 atomes de carbone.

**5.** Polymère contenant du fluor selon la revendication 1, comprenant en outre un groupement fluoroalcool dérivé d'au moins un composé à insaturation éthylénique contenant un groupement fluoroalcool ayant la structure :

$$-C(R_f)\,(R_f')OH$$

dans laquelle $R_f$ et $R_f'$ sont des groupements fluoroalkyle identiques ou différents de 1 à 10 atomes de carbone ou, pris conjointement, sont $(CF_2)_n$, dans laquelle n est 2 à 10; ces groupements fluoroalkyle étant désignés par $R_f$ et $R_f'$ et pouvant être des groupements alkyle partiellement fluorés ou des groupements alkyle complètement fluorés (c'est-à-dire des groupements perfluoroalkyle).

**6.** Polymère contenant du fluor selon la revendication 1, comprenant en outre un monomère contenant un acide ayant la structure :

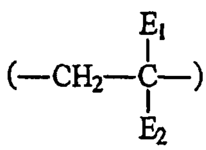

dans laquelle $E_1$ est H ou un alkyle en $C_1$-$C_{12}$; $E_2$ est $CO_2E_3$, $SO_3E$ ou un autre groupement acide; et E et $E_3$ sont H ou un alkyle en $C_1$-$C_{12}$, qui n'est pas substitué ou substitué par un hétéroatome.

**7.** Photorésist comprenant :

(I) un polymère contenant du fluor comprenant une unité récurrente dérivée d'au moins un composé polycyclique à insaturation éthylénique ayant la structure 1 :

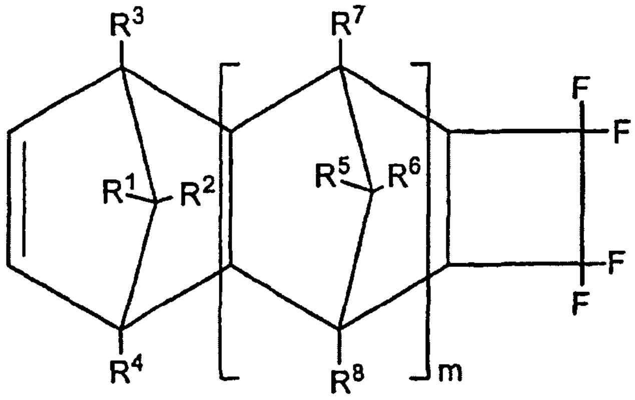

1

dans laquelle :

$R^1$ à $R^8$ sont identiques ou différents et chacun représente un atome d'hydrogène, un atome d'halogène, un groupement carboxyle, un groupement hydrocarboné de 1 à 20 atomes de carbone ou un groupement hydrocarboné substitué de 1 à 20 atomes de carbone et au moins un atome d'oxygène, de soufre ou d'azote; m est égal à 0, 1 ou 2; et

(II) un composant photoactif.

**8.** Photorésist selon la revendication 7, dans lequel $R^1$ à $R^8$ sont chacun des atomes d'hydrogène et m est zéro.

**9.** Photorésist selon la revendication 7, dans lequel le polymère contenant du fluor comprend en outre une fluorooléfine.

**10.** Photorésist selon la revendication 9, dans lequel la fluorooléfine est le tétrafluoroéthylène, le chlorotrifluoroéthylène, l'hexafluoropropylène, le trifluoroéthylène, le fluorure de vinylidène, le fluorure de vinyle, le perfluoro-(2,2-diméthyl-1,3-dioxole), le perfluoro-(2-méthylène-4-méthyl-1,3-dioxolane, $CF_2$=CFO $(CF_2)_t$CF=$CF_2$, où t est 1 ou 2, ou $R_f$OCF=$CF_2$, où $R_f$ est un groupement fluoroalkyle saturé de 1 à 10 atomes de carbone.

**11.** Photorésist selon la revendication 7, dans lequel le polymère contenant du fluor comprend en outre un groupement fluoroalcool dérivé d'au moins un composé à insaturation éthylénique contenant un groupement fluoroalcool ayant la structure :

$$-C(R_f)(R_f')OH$$

dans laquelle $R_f$ et $R_f'$ sont des groupements fluoroalkyle identiques ou différents de 1 à 10 atomes de carbone ou, pris conjointement, sont $(CF_2)_n$, où n est 2 à 10; ces groupements fluoroalkyle étant désignés par $R_f$ et $R_f'$ et pouvant être des groupements alkyle partiellement fluorés ou des groupements alkyle complètement fluorés (c'est-à-dire des groupements perfluoroalkyle).

**12.** Photorésist selon la revendication 7, dans lequel le polymère contenant du fluor comprend en outre un monomère contenant un acide ayant la structure :

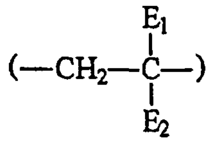

dans laquelle $E_1$ est H ou un alkyle en $C_1$-$C_{12}$; $E_2$ est $CO_2E_3$, $SO_3E$ ou un autre groupement acide; et E et $E_3$ sont H ou un alkyle en $C_1$-$C_{12}$, qui n'est pas substitué ou est substitué par un hétéroatome.

**13.** Photorésist selon la revendication 7, comprenant en outre un solvant.

**14.** Photorésist selon la revendication 7, comprenant en outre un inhibiteur de dissolution.

**15.** Photorésist selon la revendication 7, dans lequel le composant photoactif est un générateur de photoacide.

**16.** Procédé pour préparer une image de photorésist sur un substrat, comprenant, dans l'ordre :

(W) l'application d'une composition de photorésist sur un substrat, le photorésist comprenant :

(I) le polymère contenant du fluor de la revendication 1,
(II) un composant photoactif et
(III) un solvant;

(X) le séchage de la composition de photorésist appliquée pour éliminer sensiblement le solvant et former ainsi une couche de photorésist sur le substrat;
(Y) l'exposition selon une image de la couche de photorésist pour former des zones représentant une image et des zones ne représentant pas d'image; et
(Z) le développement de la couche de photorésist exposée ayant des zones représentant une image et des zones ne représentant pas d'image pour former l'image en relief sur le substrat.

**17.** Procédé selon la revendication 16, dans lequel la couche exposée est développée avec un révélateur alcalin aqueux.

**18.** Article manufacturé comprenant un substrat sur lequel est appliquée une composition de photorésist comprenant :

(I) un polymère contenant du fluor comprenant une unité récurrente dérivée d'au moins un composé polycyclique à insaturation éthylénique ayant la structure 1 :

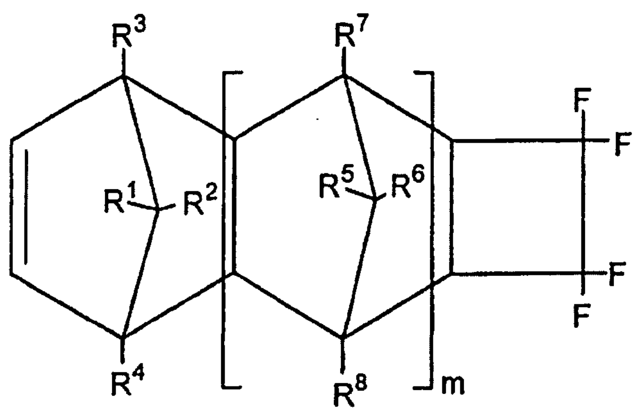

1

dans laquelle :

$R^1$ à $R^8$ sont identiques ou différents et chacun représente un atome d'hydrogène, un atome d'halogène, un groupement carboxyle, un groupement hydrocarboné de 1 à 20 atomes de carbone ou un groupement hydrocarboné substitué de 1 à 20 atomes de carbone et au moins un atome d'oxygène, de soufre ou d'azote et m est égal à 0, 1 ou 2; et

(II) un composant photoactif.

**19.** Article selon la revendication 18, dans lequel le substrat est une tranche microélectronique.

**20.** Polymère comprenant le produit de polymérisation d'un produit réactionnel de cycloaddition d'un bicyclo-[2.2.1] hepta-1,5-diène et d'une fluorooléfine choisie dans le groupe constitué du tétrafluoroéthylène et du chlorotrifluoroéthylène.